# EUROPÄISCHE PATENTSCHRIFT

(11) **EP 2 852 520 B1**
(45) Veröffentlichungstag und Bekanntmachung des Hinweises auf die Patenterteilung: **16.11.2016**
(21) Anmeldenummer: 13725315.9
(22) Anmeldetag: 16.05.2013
(51) Int. Cl.: B62D 5/083, B62D 5/09

(54) **VERFAHREN ZUR KOMPENSATION DES SPIELS IM GETRIEBE ZWISCHEN LENKRAD UND LENKVENTIL**
METHOD FOR COMPENSATING THE PLAY IN THE GEARING BETWEEN A STEERING WHEEL AND A STEERING VALVE
PROCÉDÉ DE COMPENSATION DU JEU DANS UNE TRANSMISSION ENTRE UN VOLANT ET UNE SOUPAPE DE DIRECTION

(30) Priorität: 21.05.2012 DE 102012104369
(43) Veröffentlichungstag der Anmeldung: 01.04.2015
(73) Patentinhaber: Tedrive Steering Systems GmbH, 42489 Wülfrath (DE)
(72) Erfinder: KIRSCHBAUM, Sven, 40822 Mettmann (DE); SCHULTE, Olaf, 40883 Ratingen (DE)
(74) Vertreter: Patentanwälte Bauer Vorberg Kayser
(86) Internationale Anmeldenummer: PCT/EP2013/060193
(87) Internationale Veröffentlichungsnummer: WO 2013/174723

(56) Entgegenhaltungen:
- WO-A2-2006/069922
- DE-A1-102004 015 991
- DE-U1- 20 316 602

## Beschreibung

Die Erfindung betrifft ein hydraulisches Servo-Lenksystem sowie ein zugehöriges Betriebsverfahren, wobei ein die Unterstützungskraft in ein Lenkgetriebe einleitender Lenkzylinder über ein Lenkventil in einen Hydraulikkreislauf eingebunden ist. Dabei wird die Unterstützungskraft durch das Lenkventil in Abhängigkeit eines an einem Lenkrad anliegenden Lenkmoments über ein spielbehaftetes Getriebe eingestellt. Das Lenksystem weist ferner einen auf das Getriebe einwirkenden Aktuator auf, um die Relativverstellung des Getriebes zu bewirken.

Ein übliches, hydraulisches Lenkhilfesystem eines Kraftfahrzeugs, beispielsweise eines Personenkraftwagens, dient der Lenkverstellung der Räder, insbesondere der Vorderräder, eines zweispurigen Kraftfahrzeugs. Mittels eines Lenkgetriebes werden die Räder um ihre Lenkachse verschwenkt oder eingeschlagen. Initiiert wird dies vom Fahrer des Kraftfahrzeugs mit seinem Lenkrad, das über eine Lenkspindel, auch Lenksäule genannt, unter Zwischenschaltung eines sog. Torsionsstabes mit dem Lenkgetriebe verbunden ist. In dieses Lenkgetriebe kann über einen als hydraulischen Gleichlaufzylinder ausgebildeten sogenannten Lenkzylinder eine Unterstützungskraft eingeleitet werden. Dies erfolgt in Abhängigkeit von einem vom Fahrer mit seinem Lenkrad vorgegebenen Lenkeinschlag über ein Lenkventil, dessen Betätigung an den Torsionsstab bzw. an das an diesem anliegende Torsionsmoment gekoppelt ist, was wiederum dem vom Fahrer aufgebrachten Lenkmoment entspricht. Damit gibt das Lenkventil die Abhängigkeit zwischen Lenkmoment und Unterstützungskraft vor.

Derartige übliche hydraulische Lenkhilfesysteme bzw. Servo-Lenksysteme für Kraftfahrzeuge zeichnen sich durch eine hohe Energiedichte, hohe maximale Kräfte und ein gutes dynamisches Verhalten aus.

Das Lenkventil bewirkt das Einstellen der Unterstützungskraft durch Variation einer Lenkventilöffnung des Lenkventils und damit in direkter Abhängigkeit eines an einem Lenkrad anliegenden Lenkmoments. Ferner sind Lenksysteme bekannt, bei denen die Einstellung der Lenkventilöffnung mittels eines Getriebes erfolgt, beispielsweise ist zwischen Ritzelwelle und Ventilhülse des Lenkventils ein Zahnradgetriebe vorgesehen. Ein solches Getriebe ist insbesondere bei solchen Lenksystemen vorgesehen, bei denen zusätzlich das Verhältnis zwischen Lenkventilöffnung und anliegendem Lenkmoment damit die Ventilcharakteristik (auch "Boost-Kurve" genannt) durch einen Aktuator variierbar ist. Derartige Lenkventile sind beispielsweise i n der DE 102007028529 A1, der EP 1514766 A1 und der DE 102004015991A1 offenbart und wurden unter dem Begriff "Momentenüberlagerung" entwickelt, um die Funktionalität der hydraulischen Lenkung im Hinblick auf automatisches Einparken und Spurhaltefunktionen zu erweitern. Während bei herkömmlichen Lenkventilen die Lenkventilöffnung und damit die einsetzende Lenkunterstützung in direktem Zusammenhang zu dem am Lenkrad aufgebrachten Lenkmoment steht, ist hier eine zusätzliche überlagerte Verstellung durch einen Aktuator ermöglicht. Beispielsweise sind bei einer herkömmlichen Lenkung die mit der Zahnstange in Eingriff stehende Ritzelwelle und die Ventilhülse fest miteinander verbunden, während bei diesen erfindungsgemäßen Ventilen beispielsweise eine durch den Aktuator bewirkte Relativbewegung ermöglicht ist. Hierzu gibt es verschiedene, dem Fachmann geläufige, technische Ansätze.

All diesen Ansätzen ist der Nachteil gemeinsam, dass das Getriebe spielbehaftet ist und somit bei Lenkrichtungswechseln ein Lenkwinkelbereich vorhanden ist, in dem die Lenkventilöffnung dem Lenkmoment nicht nachgeführt wird und nachläuft. Dies beeinträchtigt sehr stark das Lenkgefühl, sorgt im besten Fall für ein als nachteilig empfundenes, sehr indirektes Lenkgefühl, in der Regel spürt der Fahrer das Spiel als Unstetigkeit des Lenkmoments, insbesondere bei mehrmaligem Richtungswechsel , zum Beispiel bei einer langgezogenen Kurvenfahrt. Diese Unstetigkeit wird auch als "Handshake" bezeichnet. Dieses Handshake tritt insbesondere bei hohen Differenzdrücken der beiden Kammern im Hydraulikzylinder und steiler Boost-Kurve auf, da gerade in diesem Arbeitsbereich ein kleiner Differenzwinkel, welcher aus dem Spiel resultiert, deutlich größere Differenzdrücke verursacht.

Die DE 20316602 U1 offenbart ein Betriebsverfahren für ein hydraulisches Servo-Lenksystem eines Kraftfahrzeugs gemäß dem Oberbegriff des Anspruchs 1.

Vor dem Hintergrund der Nachteile des Standes der Technik ist es daher Aufgabe der vorliegenden Erfindung, das Lenkverhalten zu verbessern und insbesondere die Nachteile des Spiels des Getriebes zur Lenkventileinstellung zumindest in speziellen Lenksituationen zu vermeiden sowie.das Ansprechverhalten eines hydraulischen Servo-Lenksystems zu verbessern.

Diese Aufgabe wird durch ein Verfahren gemäß Anspruch 1 sowie den nebengeordneten Vorrichtungsanspruch gelöst. Vorteilhafte Ausgestaltungen sind jeweils Gegenstand der abhängigen Ansprüche. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung charakterisiert und spezifiziert die Erfindung zusätzlich.

Das erfindungsgemäße Betriebsverfahren für ein hydraulisches Servo-Lenksystem sieht vor, dass ein die Unterstützungskraft in ein Lenkgetriebe einleitender Lenkzylinder über ein Lenkventil, dessen Lenkventilöffnung die Unterstützungskraft vorgibt, in einen Hydraulikkreis eingebunden ist. Der Hydraulikkreis umfasst ferner beispielsweise eine Hydraulikpumpe, die das Hydraulikfluid mit Druck beaufschlagt, um eine Zirkulation zu bewirken.

Das gemäß dem erfindungsgemäßen Betriebsverfahren vorgesehene Lenkventil bewirkt das Einstellen der Unterstützungskraft durch Variation einer Lenkventilöffnung des Lenkventils in direkter Abhängigkeit eines an einem Lenkrad anliegenden Lenkmoments. Die Variation der Lenkventilöffnung erfolgt erfindungsgemäß mittels eines spielbehafteten Getriebes, das beispielsweise die Lenkbewegung der Ritzelwelle auf eine Ventilhülse des Lenkventils überträgt. Es ist ferner erfindungsgemäß ein auf das Getriebe einwirkender Aktuator vorgesehen, um eine Relativverstellung des Getriebes, also beispielsweise eine Relativverdrehung der Ventilhülse gegenüber der Ritzelwelle, zu bewirken. Erfindungsgemäß umfasst das Betriebsverfahren somit einen Kompensationsschritt, bei dem, sofern eine Lenkrichtungsumkehr detektiert wird, das Getriebe entgegen seiner vorhergehenden Eingriffsrichtung für eine vorgegebene Dauer oder um einen vorgegebenen Verstellweg mittels des Aktuators relativ verstellt wird. Die Umkehr der Eingriffsrichtung, meint beispielsweise die Umkehr der Drehrichtung eines Zahnradgetriebes. Durch diese Maßnahme kann das Spiel also der sich durch das Spiel ergebende "Totgang" wenigstens teilkompensiert werden. Es wird vermieden, dass bei Lenkrichtungswechseln die Lenkventilöffnung dem Lenkmoment nicht nachgeführt wird und nachläuft. Die sich dadurch ergebende Beeinträchtigung des Lenkgefühls, wie der sogenannte Handshake, wird verringert, wenn nicht gar eliminiert.

Der Begriff hydraulisches Servo-Lenksystem ist weit auszulegen und umfasst sämtliche Lenksystem mit hydraulischer Lenkkraftunterstützung und ist daher nicht auf eine Zahnstangenlenkung, also einen Ritzel-Zahnstangeneingriff zwischen Lenksäule und Lenkstange, beschränkt. Beispielsweise kann es sich auch um eine hydraulisch unterstützte Blocklenkung oder eine hydraulisch unterstützte Kugelumlauflenkung handeln. Bevorzugt umfasst das Servo-Lenksystem eine Zahnstange und ein mit der Zahnstange in Eingriff stehendes Ritzel, sowie mit dem Ritzel drehfest verbundene Ausgangswelle, auch Ritzelwelle genannt, und das Getriebe ist zwischen Lenkventil und Ausgangswelle vorgesehen.

Gemäß einer bevorzugten Ausgestaltung ist das Verhältnis zwischen Lenkventilöffnung und anliegendem Lenkmoment und damit die Ventilcharakteristik (auch "Boost-Kurve" genannt) durch einen Aktuator variierbar. Derartige Lenkventile sind beispielsweise aus der DE 102007028529 A1, der EP 1514766 A1 und der DE 102004015991A1 bekannt und wurden unter dem Begriff "Momentenüberlagerung" entwickelt, um die Funktionalität der hydraulischen Lenkung im Hinblick auf automatisches Einparken- und Spurhaltefunktionen zu erweitern. Während bei herkömmlichen Lenkventilen die Lenkventilöffnung und damit die einsetzende Lenkunterstützung in direktem Zusammenhang zu dem am Lenkrad aufgebrachten Lenkmoment steht, ist hier eine zusätzliche überlagerte Verstellung durch einen Aktuator ermöglicht. Zwischen dem Aktuator und dem Lenkventil ist ein Getriebe gesehen. Die Herstellung eines Getriebes mit verringertem Spiel ist teuer und aufwändig, da die Getriebekomponenten geringe Herstellungstoleranzen aufweisen müssen. Beispielsweise sind bei einer herkömmlichen Lenkung die mit der Zahnstange in Eingriff stehende Ritzelwelle und die Ventilhülse fest miteinander verbunden, während bei diesen erfindungsgemäßen Ventilen beispielsweise eine durch den Aktuator bewirkte Relativverstellung der Lenkventilöffnung ermöglicht ist Hierzu gibt es verschiedene, dem Fachmann geläufige, technische Ansätze.

Gemäß einer Ausgestaltung meint Variation der Lenkventilcharakteristik beispielsweise eine Drehverstellung der Lenkventilhülse relativ aus der durch die Stellung der Ritzelwelle vorgegebenen Stellung. Ritzelwelle und Einganswelle sind bei dieser Ausgestaltung über einen Torsionsstab relativ zueinander rück-stellend verdrehbar. Die Stellung der Ventilhülse relativ zur Eingangswelle bestimmt die Unterstützungskraft. Eine Relativverdrehung der Ventilhülse bewirkt somit auch eine Relativverdrehung zur Eingangswelle, so dass die Unterstützungskraft durch die Verdrehung variiert wird.

Der maximale, durch den Aktuaktor bewirkte Verstellweg ist gemäß einer einfachen Ausgestaltung für alle Lenksituationen fest und als konstanter Wert vorgegeben und ist entsprechend dem Spiel des Getriebes bemessen. Obwohl diese erfindungsgemäße Vorgehensweise den "Handshake," minimiert, ist diese "starre" Vorgehensweise nicht optimal und wirkt sich nachteilig auf die Stabilität der Regelung der Unterstützungskraft aus. Bevorzugt ist daher vorgesehen, dass der maximale Verstellweg und/ oder die Verstelldauer und/oder Verstellgeschwindigkeit in Abhängigkeit von Lenkungsmessgrößen wie dem momentanen Lenkwinkel und/oder dem momentanen oder vorhergehenden Lenkmoment und/oder der momentanen Lenkgeschwindigkeit gewählt werden, um lenkungssituationsbedingt das Spiel zu korrigieren. Beispielsweise ist der maximale Verstellweg von dem Lenkwinkel abhängig und nimmt beispielsweise mit zunehmendem Lenkwinkel aus der Geradeausfahrtstellung zu.

Gemäß einer weiteren vorteilhaften Ausgestaltung werden der Verstellweg und/oder die Dauer und/oder die Verstellgeschwindigkeit in Abhängigkeit von Fahrzeugmessgrößen, wie der momentanen Fahrzeuggeschwindigkeit, der momentanen Gierrate gewählt.

Gemäß einer weiteren Ausführungsform ist der Kompensationsschritt nur dann vorgesehen, wenn der Lenkwinkel über einem vorgegebenen Wert liegt. Beispielsweise erfolgt der Kompensationsschritt, wenn der Lenkwinkel einige wenige Grade, wie 1 Grad, bezogen auf die Gradeausfahrtstellung übersteigt.

Gemäß einer weiteren Ausgestaltung ist vorgesehen, dass das Spiel des Getriebes detektiert wird. Das Spiel wird in einer Ausgestaltung mittels eines Drehmomentsensors zwischen Eingangswelle und Lenkventilhülse in geeigneten Fahr- oder Lenksituationen detektiert. Beispielsweise kann das Spiel auch während der Produktion des Lenksystems ermittelt werden.

Bei einer weiteren, vorteilhaften Ausgestaltung wird bei Detektion der bei Lenkrichtungsumkehr vorliegende Lenkwinkel detektiert und gespeichert, und der Verstellweg des Aktuators wird im nachfolgenden Kompensationsschritt proportional zur Differenz zwischen momentanem Lenkwinkel und gespeichertem Lenkwinkel gewählt.

Gemäß einer Ausgestaltung ist vorgesehen, die Lenkrichtungsumkehr, also die Drehrichtungsumkehr des Lenkrades, an der Ritzelwelle mittels eines Lenkwinkelsensors zu detektieren.

Bevorzugt erfolgt die Detektion der Lenkrichtungsumkehr durch einen Lenkwinkelsensor, der unmittelbar die Drehbewegung einer drehstarr mit dem Lenkrad verbundenen Eingangswelle detektiert.

Gemäß einer bevorzugten Ausgestaltung weist das Lenkventil ein Planetengetriebe zur Variation der Ventilcharakteristik durch den Aktuator auf. Derartige Lenkventile zeichnen sich durch eine besonders schnelle und präzise Verstellbarkeit der Ventilcharakteristik aus. Ein derartiges Lenkventil ist aus der DE 102004049686 A1 bekannt. Noch bevorzugter ist die in der DE 102009029532 beschriebene Ausgestaltung.

Der erfindungsgemäße Aktuator ist bevorzugt ein elektromechanischer Aktuator, beispielsweise ein Schrittmotor oder ein Servomotor ist.

Gemäß einer weiteren Ausgestaltungsvariante des erfindungsgemäßen Verfahrens wird der vorgegebene maximale Verstellweg mittels des Aktuators stetig, beispielsweise mit rampenförmigem oder sinusförmigem Anstieg auf die Maximaleinstellung eingestellt. D.h. der Aktuator wird so angesteuert, dass eine abrupte Verstellung vermieden wird. Dies verhindert, dass die Nachstellung akustisch wahrnehmbar ist und/oder über den Lenkungsstrang am Lenkrad haptisch merkbare ist. Ein rampenförmiger Anstieg meint beispielsweise eine linear zunehmende Verstellung bis auf einen maximalen Verstellweg, der beispielsweise dem des Getriebespiels entspricht. Ein sinusförmiger Anstieg meint einen Anstieg, der dem Sinusverlauf zwischen 0 und 90° entspricht. Bevorzugt wird die Steilheit also die Geschwindigkeit mit der die stetige Verstellung erfolgt, lenkungssituationsbedingt gewählt, beispielsweise in Abhängigkeit des vor der Verstellung anliegenden Lenkwinkels und/oder der momentan vorliegenden Lenkgeschwindigkeit. Beispielsweise erfolgt bei hoher Lenkgeschwindigkeit (also schneller Änderung des Lenkwinkels) eine Verstellung durch den Aktuator auf den maximalen Verstellweg in einigen wenigen ms, während bei langsamer Lenkgeschwindigkeit eine Verstellung in 100 ms oder mehr erfolgen kann.

Die Erfindung betrifft ferner ein hydraulisches Servo-Lenksystem, welches Folgendes aufweist: einen Hydraulikkreis, ein in den Hydraulikkreis eingebundener, eine Unterstützungskraft in ein Lenkgetriebe einleitender Lenkzylinder, ein in den Hydraulikkreis eingebundenes Lenkventil, das die Unterstützungskraft in Abhängigkeit eines an einem Lenkrad anliegenden Lenkmoments über ein spielbehaftetes Getriebe einstellt. Das Lenksystemumfasst ferner einen auf das Getriebe einwirkenden Aktuator, um dessen Relativverstellung zu bewirken, sowie eine Steuereinheit, wobei die Steuereinheit ausgelegt ist, das Betriebsverfahren gemäß einer der zuvor beschriebenen Ausführungsformen durchzuführen. Erfindungsgemäß umfasst ist somit ein Kompensationsschritt, bei dem, sofern eine Lenkrichtungsumkehr detektiert wird, das Getriebe entgegen seiner vorhergehenden Eingriffsrichtung für eine vorgegebene Dauer oder einen vorgegebenen Verstellweg mittels des Aktuators relativ verstellt wird. Die Umkehr der Eingriffsrichtung, meint beispielsweise die Umkehr der Drehrichtung eines Zahnradgetriebes. Durch diese Maßnahme kann das Spiel also der sich durch das Spiel ergebende "Totgang" wenigstens teilkompensiert werden. Es wird vermieden, dass bei Lenkrichtungswechseln die Lenkventilöffnung dem Lenkmoment nicht nachgeführt wird und nachläuft. Die sich dadurch ergebende Beeinträchtigung des Lenkgefühls, wie der sogenannte Handshake, wird verringert, wenn nicht gar eliminiert. Entsprechend ausgerüstete Lenksysteme lassen sich preiswerter herstellen, da Fertigungstoleranzen verringert werden können

## Patentansprüche

1. Betriebsverfahren für ein hydraulisches Servo-Lenksystem eines Kraftfahrzeugs, bei dem ein die Unterstützungskraft in ein Lenkgetriebe einleitender Lenkzylinder über ein Lenkventil, dessen Lenkventilöffnung die Unterstützungskraft vorgibt, in einen Hydraulikkreis eingebunden ist, wobei die Unterstützungskraft durch das Lenkventil in Abhängigkeit eines an einem Lenkrad anliegenden Lenkmoments über ein spielbehaftetes Getriebe eingestellt wird, und das Lenksystem ferner einen auf das Getriebe einwirkenden Aktuator, um dessen Relativverstellung zu bewirken, umfasst, **dadurch gekennzeichnet, dass** das Betriebsverfahren einen Kompensationsschritt vorsieht, bei dem, sofern eine Lenkrichtungsumkehr detektiert wird, das Getriebe entgegen seiner vorhergehenden Eingriffsrichtung für eine vorgegebene Dauer oder um einen vorgegebenen Verstellweg mittels des Aktuators relativ verstellt wird.

2. Betriebsverfahren gemäß Anspruch 1, mit wenigstens einem weiteren Schritt, bei dem mittels des Aktuators und des Getriebes eine Variation der Ventilcharakteristik erfolgt.

3. Betriebsverfahren gemäß einem der vorhergehenden Ansprüche, wobei der Verstellweg und/oder die Verstelldauer und/oder die Verstellgeschwindigkeit in Abhängigkeit von Lenkungsmessgrößen wie dem momentanen Lenkwinkel und/oder dem momentanen oder vorhergehenden Lenkmoment und/oder der momentanen Lenkgeschwindigkeit gewählt werden.

4. Betriebsverfahren gemäß einem der vorhergehenden Ansprüche, wobei der Verstellweg und/oder die Verstelldauer und/oder die Verstellgeschwindigkeit in Abhängigkeit von Fahrzeugmessgrößen, wie der momentanen Fahrzeuggeschwindigkeit, der momentanen Gierrate gewählt werden.

5. Betriebsverfahren gemäß einem der vorhergehenden Ansprüche, wobei der Kompensationsschritt nur dann vorgesehen ist, wenn der Lenkwinkel über einem vorgegebenen Wert liegt.

6. Betriebsverfahren gemäß einem der beiden vorhergehenden Ansprüche, wobei ein Detektionsschritt vorgesehen ist, bei dem das Spiel des Getriebes detektiert wird.

7. Betriebsverfahren gemäß einem der vorhergehenden Ansprüche, wobei bei Detektion der bei Lenkrichtungsumkehr vorliegende Lenkwinkel gemessen wird und gespeichert wird und der maximale Verstellweg des Aktuators im nachfolgenden Kompensationsschritt proportional zur Differenz zwischen momentanem Lenkwinkel und gespeichertem Lenkwinkel gewählt wird.

8. Betriebsverfahren gemäß einem der vorhergehenden Ansprüche, wobei die Detektion der Lenkrichtungsumkehr durch einen Lenkwinkelsensor erfolgt, der unmittelbar die Drehbewegung einer drehstarr mit dem Lenkrad verbundenen Eingangswelle detektiert.

9. Betriebsverfahren gemäß einem der vorhergehenden Ansprüche, wobei das Lenkventil wenigstens ein Planetengetriebe zur Variation der Ventilcharakteristik durch den Aktuator aufweist.

10. Betriebsverfahren gemäß einem der vorhergehenden Ansprüche, wobei der Aktuator ein elektromechanischer Aktuator, beispielsweise ein Schrittmotor oder ein Servomotor ist.

11. Betriebsverfahren gemäß einem der vorhergehenden Ansprüche, wobei der vorgegebene Verstellweg mittels des Aktuators stetig, beispielsweise mit rampenförmigem oder sinusförmigem Anstieg, eingestellt wird.

12. Betriebsverfahren gemäß einem der vorhergehenden Ansprüche, wobei das Servo-Lenksystem eine Zahnstange und ein mit der Zahnstange in Eingriff stehendes Ritzel, sowie mit dem Ritzel drehfest verbundene Ritzelwelle umfasst und das Getriebe zwischen Lenkventil und Ritzelwelle vorgesehen ist.

13. Hydraulisches Servo-Lenksystem, welches Folgendes aufweist: einen Hydraulikkreis, ein in den Hydraulikkreis eingebundener, eine Unterstützungskraft in ein Lenkgetriebe einleitender Lenkzylinder, ein in den Hydraulikkreis eingebundenes Lenkventil, das die Unterstützungskraft in Abhängigkeit eines an einem Lenkrad anliegenden Lenkmoments über ein spielbehaftetes Getriebe einstellt, und das Lenksystem ferner einen auf das Getriebe einwirkenden Aktuator, um dessen Relativverstellung zu bewirken, sowie eine Steuereinheit umfasst, wobei die Steuereinheit ausgelegt ist, das Betriebsverfahren nach einem der vorhergehenden Ansprüche durchzuführen.

## Claims

1. An operating process for a hydraulic servo-steering system of a vehicle, in which a steering cylinder introducing the power assist into a steering gear is integrated in a hydraulic circuit via a steering valve the steering valve opening of which specifies the power assist, wherein the power assist is set by the steering valve, depending on a steering momentum applied to the steering wheel, via a backlashed gear, and the steering system furthermore comprises an actuator acting on the gear to cause relative adjustment thereof, **characterized in that** the operating process provides a compensating step, wherein, provided that reversal of steering direction is being detected, the gear is relatively adjusted by the actuator, oppositely to its precedent engagement direction, for a specified period of time or for a specified adjustment track.

2. The operating process according to claim 1, having at least one other step, wherein variation of the valve characteristics is being made by way of the actuator and the gear.

3. The operating process according to one of the preceding claims, wherein the adjustment track and/or the adjustment period and/or the adjustment velocity are chosen depending on the measured steering values, such as current steering angle and/or current or precedent steering momentum and/or current steering velocity.

4. The operating process according to one of the preceding claims, wherein the adjustment track and/or the adjustment period and/or the adjustment velocity are chosen depending on the measured vehicle parameters, such as current vehicle speed, current jaw rate.

5. The operating process according to one of the preceding claims, wherein the compensation step is not provided unless the steering angle exceeds a specified value.

6. The operating process according to one of the preceding claims, wherein the detection step is provided, where the backlash of the gear is being detected.

7. The operating process according to one of the preceding claims, wherein, during detection, the steering angle present during reversal of steering direction is being measured and stored and the maximum adjustment track of the actuator will be chosen in the subsequent compensation step as being proportional to the difference between the current steering angle and the stored steering angle.

8. The operating process according to one of the preceding claims, wherein detecting reversal of steering direction is made by way of a steering angle sensor that immediately detects the rotational movement of an input shaft non-rotatably coupled to the steering wheel.

9. The operating process according to one of the preceding claims, wherein the steering valve has at least one planetary gear for varying the valve characteristics by the actuator.

10. The operating process according to one of the preceding claims, wherein the actuator is an electro-mechanical actuator, for example a step motor or a servomotor.

11. The operating process according to one of the preceding claims, wherein the specified adjustment track is being set by the actuator continuously, for example with a rampshaped or sinusoidal slope.

12. The operating process according to one of the preceding claims, wherein the servo steering system comprises a steering rack and a pinion being engaged into the steering rack, as well as a pinion shaft non-rotatably coupled to the pinion, and the gear is provided between the steering valve and the pinion shaft.

13. A hydraulic steering system comprising: a hydraulic circuit, a steering cylinder introducing the power assist into a steering gear and integrated in the hydraulic circuit, a steering valve integrated in the hydraulic circuit setting the power assist depending on a steering momentum applied to the steering wheel via a backlashed gear, and the steering system furthermore comprises an actuator acting on the gear to cause relative adjustment thereof, as well as a steering unit configured to perform the operating process according to one of the preceding claims.

## Revendications

1. Procédé d'opération pour un système de direction assistée hydraulique d'un véhicule automobile, dans lequel un vérin de direction introduisant la force d'assistance dans un boîtier de direction est intégré dans un circuit hydraulique via une soupape de direction dont l'ouverture de soupape de direction détermine la force d'assistance, dans lequel la force d'assistance par la soupape de direction est réglée en fonction d'un moment de direction appliqué à un volant de direction, par l'intermédiaire d'un engrenage à jeu, et le système de direction comprend en outre un actionneur agissant sur l'engrenage afin de provoquer le réglage relatif de celui-ci, **caractérisé par le fait que** le procédé d'opération prévoit une étape de compensation dans laquelle, si une inversion de sens de direction est détectée, l'engrenage est réglé relativement par le biais dudit actionneur, à l'encontre de sa direction d'engrènement précédente, pour une durée prédéterminée ou d'une course de réglage prédéterminée.

2. Procédé d'opération selon la revendication 1, comprenant au moins une autre étape dans laquelle une variation de la caractéristique de soupape se fait au moyen de l'actionneur et de l'engrenage.

3. Procédé d'opération selon l'une quelconque des revendications précédentes, dans lequel la course de réglage et/ou la durée de réglage et/ou la vitesse de réglage sont choisies en fonction de grandeurs de mesure de direction, telles que l'angle de direction instantané et/ou le moment de direction instantané ou précédent et/ou la vitesse de direction instantanée.

4. Procédé d'opération selon l'une quelconque des revendications précédentes, dans lequel la course de réglage et/ou la durée de réglage et/ou la vitesse de réglage sont choisies en fonction de grandeurs de mesure de véhicule, telles que la vitesse de véhicule instantanée, le taux de lacet instantané.

5. Procédé d'opération selon l'une quelconque des revendications précédentes, dans lequel l'étape de compensation n'est prévue que lorsque l'angle de direction est supérieur à une valeur prédéterminée.

6. Procédé d'opération selon l'une quelconque des deux revendications précédentes, dans lequel une étape de détection est prévue dans laquelle le jeu de l'engrenage est détecté.

7. Procédé d'opération selon l'une quelconque des revendications précédentes, dans lequel, en cas de détection, l'angle de direction présent lors de l'inversion de sens de direction est mesuré et mémorisé et la course maximale de réglage de l'actionneur est choisie, dans l'étape de compensation subséquente, proportionnellement à la différence entre l'angle de direction instantané et l'angle de direction mémorisé.

8. Procédé d'opération selon l'une quelconque des revendications précédentes, dans lequel la détection de l'inversion de sens de direction se fait par un capteur d'angle de direction qui détecte directement le mouvement de rotation d'un arbre d'entrée relié de manière rigide en rotation au volant de direction.

9. Procédé d'opération selon l'une quelconque des revendications précédentes, dans lequel la soupape de direction présente au moins un engrenage planétaire pour la variation de la caractéristique de soupape par l'actionneur.

10. Procédé d'opération selon l'une quelconque des revendications précédentes, dans lequel ledit actionneur est un actionneur électromécanique, par exemple un moteur pas à pas ou un servomoteur.

11. Procédé d'opération selon l'une quelconque des revendications précédentes, dans lequel la course de réglage prédéterminée est réglée de manière continue, par exemple avec une montée en rampe ou sinusoïdale, au moyen de l'actionneur.

12. Procédé d'opération selon l'une quelconque des revendications précédentes, dans lequel le système de direction assistée comprend une crémaillère et un pignon qui est en prise avec la crémaillère ainsi qu'un arbre de pignon qui est solidaire en rotation du pignon, et l'engrenage est prévu entre la soupape de direction et l'arbre de pignon.

13. Système de direction assistée hydraulique qui comprend ce qui suit: un circuit hydraulique, un vérin de direction intégré dans le circuit hydraulique et introduisant une force d'assistance dans un boîtier de direction, une soupape de direction intégrée dans le circuit hydraulique qui règle la force d'assistance en fonction d'un moment de direction appliqué à un volant de direction, par l'intermédiaire d'un engrenage à jeu, et ledit système de direction comprend en outre un actionneur agissant sur l'engrenage afin de provoquer le réglage relatif de celui-ci, ainsi qu'une unité de commande, ladite unité de commande étant conçue pour mettre en oeuvre le procédé d'opération selon l'une quelconque des revendications précédentes.
